# EUROPÄISCHE PATENTANMELDUNG

(11) **EP 2 177 553 A1**
(43) Veröffentlichungstag der Anmeldung: **21.04.2010**
(21) Anmeldenummer: 08166914.5
(22) Anmeldetag: 17.10.2008
(51) Int. Cl.: C08G 18/67, C09J 175/14, C09J 175/16

(54) **Radikalisch härtbare Zusammensetzungen mit reduzierter Weichmacheraufnahme**

(71) Anmelder: Sika Technology AG, 6340 Baar (CH)
(72) Erfinder: Maier, Steffen, 5430 Wettingen (CH); Hug, Max, 8038 Zürich (CH); Kramer, Andreas, 8006 Zürich (CH); Cirillo, Fabio, 4153 Reinach (CH)
(74) Vertreter: Sika Patent Attorneys

(57) **Zusammenfassung**

Die vorliegende Erfindung betrifft elastische (Meth)acrylatzusammensetzungen umfassend mindestens ein radikalisch polymerisierbares Monomer sowie mindestens ein Polyurethan(meth)acrylat, welches erhältlich ist aus der Umsetzung eines Polyesterpolyols mit einem Diisocyanat und einer (Meth)-acrylsäure oder einem (Meth)acrylamid oder einem (Meth)acrylsäureester der Formel (1).

Erfindungsgemässe Zusammensetzungen eignen sich als Klebstoffe, Dichtstoffe oder als Beschichtungen, insbesondere zur Verklebung von weichmacherhaltigen Substraten. Sie weisen den Vorteil auf, dass sie keinen oder nur unwesentlich geringe Mengen an Weichmacher aufnehmen.

## Beschreibung

### Technisches Gebiet

Die Erfindung betrifft das Gebiet der elastischen Klebstoffe, Dichtstoffe und Beschichtungen auf der Basis von radikalisch polymerisierbaren Monomeren.

### Stand der Technik

Zusammensetzungen auf der Basis von radikalisch polymerisierbaren Monomeren, insbesondere (Meth)acrylatzusammensetzungen, werden seit längerem in der Klebe-, Dicht- und Beschichtungstechnik eingesetzt. Ebenfalls bekannt ist der Einsatz von (meth)acrylatfunktionalisierten Elastomeren zur Erhöhung der Flexibilität solcher Kleb- und Dichtstoffe sowie Beschichtungen.
Beispielsweise sind derartige Zusammensetzungen beschrieben in WO 02/070620 A1. Die beschriebenen Zusammensetzungen weisen dabei oft sehr guten Eigenschaften in Bezug auf ihre Flexibilität und auf ihre Schlagzähigkeit auf und finden breite Anwendung. Diese Zusammensetzungen weisen jedoch bei der Verklebung, Abdichtung oder Beschichtung von weichmacherhaltigen Materialien die Eigenschaft auf, aus dem Substrat austretende Weichmacher aufzunehmen. In gewissen Anwendungen ist diese Eigenschaft unerwünscht.
Die zur Verminderung der Weichmacheraufnahme von Klebstoffen, Dichtstoffen oder Beschichtungen oft wirksame Erhöhung der Vernetzungsdichte eignet sich in diesem Fall nicht, da dadurch die Elastizität der Zusammensetzung vermindert wird.

### Darstellung der Erfindung

Aufgabe der vorliegenden Erfindung ist es daher, elastische (Meth)acrylatzusammensetzungen zur Verfügung zu stellen, welche keinen oder nur unwesentlich geringe Mengen an Weichmacher aufnehmen.
Überraschenderweise wurde nun gefunden, dass Zusammensetzungen gemäss Anspruch 1 diese Aufgabe lösen.

Durch den Einsatz spezifischer Polyurethan(meth)acrylate auf der Basis von Polyesterpolyolen können Zusammensetzungen hergestellt werden, welche keinen oder nur unwesentlich geringe Mengen an Weichmacher, insbesondere aus den mit der (Meth)acrylatzusammensetzung verklebten, abgedichteten oder beschichteten Substraten, aufnehmen. Der Einsatz von Polyurethan(meth)acrylaten auf der Basis von Polyesterpolyolen ist dabei für den Fachmann in keiner Weise nahe liegend.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Kurze Beschreibung der Zeichnungen

Anhand der Zeichnungen werden Ausführungsbeispiele der Erfindung näher erläutert. Gleiche Elemente sind in den verschiedenen Figuren mit den gleichen Bezugszeichen versehen. Selbstverständlich ist die Erfindung nicht auf gezeigte und beschriebene Ausführungsbeispiele beschränkt.

Es zeigen:
Figur 1 eine schematische Darstellung eines Fensterprofils mit eingeklebter Isolierglasscheibe im Querschnitt;
Figur 2 eine schematische Darstellung zweier verklebter Substrate.

In den Figuren sind nur die für das unmittelbare Verständnis der Erfindung wesentlichen Elemente gezeigt.

### Bezugszeichenliste

| | | | |
|---|---|---|---|
| 1 | Glasscheibe | 6 | Klebstoff |
| 2 | Fensterprofil | 7 | Dichtlippe |
| 3 | Abstandhalter | 8 | weichmacherhaltiges Material |
| 4 | Primärdichtung | 9 | nicht weichmacherhaltiges Material |
| 5 | Sekundärdichtung | | |

### Wege zur Ausführung der Erfindung

Gegenstand der vorliegenden Erfindung ist eine Zusammensetzung umfassend
a) mindestens ein radikalisch polymerisierbares Monomer **M**, sowie
b) mindestens ein Polyurethan(meth)acrylat **PUMA**, welches erhältlich ist aus der Umsetzung eines Polyesterpolyols **P** mit einem Diisocyanat und einer (Meth)acrylsäure oder einem (Meth)acrylamid oder einem (Meth)acrylsäureester der Formel (I).

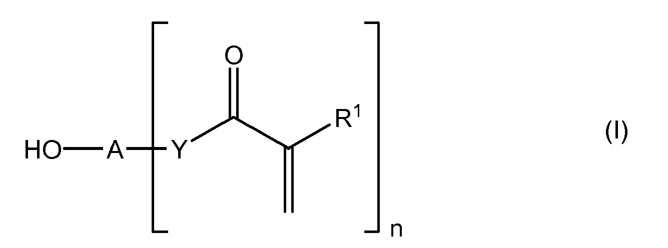

Dabei steht der Rest R¹ für ein Wasserstoffatom oder für eine Methylgruppe.

Der Rest A steht für einen (n+1)-wertigen Kohlenwasserstoffrest mit 1 bis 6, insbesondere mit 2 bis 4, C-Atomen.
Y steht für O oder für NR², wobei R² für ein Wasserstoffatom oder für einen einwertigen Kohlenwasserstoffrest mit 1 bis 6 C-Atomen steht. Insbesondere steht Y für O.
Der Index n steht für einen Wert von 1 bis 3, insbesondere für 1.

Mit "Poly" beginnende Substanznamen wie beispielsweise Polyisocyanat, Polyurethan, Polyester oder Polyol bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Unter "Molekulargewicht" versteht man im vorliegenden Dokument stets das Zahlenmittel des Molekulargewichts Mₙ.

Das radikalisch polymerisierbare Monomer **M** ist insbesondere ausgewählt sind aus der Gruppe bestehend aus Methyl(meth)acrylat, Tetrahydrofurfuryl(meth)acrylat, Tetrahydrofuryl(meth)acrylat, Cyclohexyl-(meth)acrylat, Isobornyl(meth)acrylat und Trimethylcyclohexyl(meth)acrylat. Bevorzugt ist das radikalisch polymerisierbare Monomer **M** ein Methacrylat.

Der Anteil an radikalisch polymerisierbarem Monomer **M** beträgt vorzugsweise 10 bis 90 Gew.-%, insbesondere 25 bis 75 Gew.-%, bevorzugt 30 bis 65 Gew.-%, an der gesamten Zusammensetzung.

Weiterhin umfasst die Zusammensetzung mindestens ein Polyurethan-(meth)acrylat **PUMA**, welches erhältlich ist aus der Umsetzung eines Polyesterpolyols **P** mit einem Diisocyanat und einer (Meth)acrylsäure oder einem (Meth)acrylamid oder einem (Meth)acrylsäureester der Formel (I).

Als Polyesterpolyol **P** sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.
Insbesondere geeignet sind Polyesterpolyole, welche hergestellt sind aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Bevorzugt ist das Polyesterpolyol **P** ein aliphatisches Polyesterpolyol.

Weiterhin bevorzugt ist das Polyesterpolyol **P** ein Polyesterdiol. Geeignete Polyesterdiole sind insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polyesterpolyole **P** eignen sich weiterhin auch Polyetherpolyesterpolyole, insbesondere Copolymere von vorhergehend genannten Polyesterpolyolen und Polyetherpolyolen. Dafür geeignete Polyetherpolyole sind beispielsweise jene, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.
Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Insbesondere geeignet sind Polyesterpolyole **P** mit einem Molekulargewicht von 400 bis 12'000 g/mol, insbesondere 1'000 bis 6'000 g/mol, bevorzugt 2'000 bis 5'500 g/mol.
Bevorzugt handelt es sich bei den Polyesterpolyolen **P** um amorphe Polyesterpolyole, insbesondere um solche, welche bei Raumtemperatur (23°C) flüssig sind. Weiterhin bevorzugt sind Polyesterpolyole **P**, welche eine tiefe Glasübergangstemperatur (Tg) aufweisen, insbesondere eine Glasübergangstemperatur im Bereich von -80°C bis 0°C, insbesondere von -70°C bis -50 °C.

Als Diisocyanate eignen sich grundsätzlich alle Diisocyanate. Insbesondere eignen sich 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyana-to-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3-und 1,4-Bis-(isocyanatomethyl)-cyclohexan, m- und p-Xylylendiisocyanat (mund p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.
Bevorzugt sind aliphatische und cycloaliphatische Diisocyanate. Meist bevorzugt ist 1-Isocyanato-3,3,5-trimethyl-5-isocyanatomethyl-cyclohexan (IPDI).

Weiterhin bedarf es zur Herstellung des Polyurethan(meth)acrylats **PUMA** (Meth)acrylsäure oder (Meth)acrylamid oder ein (Meth)acrylsäureester der Formel (I).
Als (Meth)acrylsäureester der Formel (I) eignen sich insbesondere Hydroxyalkyl(meth)acrylate. Insbesondere ist der (Meth)acrylsäureester der Formel (I) ausgewählt aus der Gruppe bestehend aus wie Hydroxypropylacrylat (HPA), Hydroxypropylmethacrylat (HPMA), Hydroxybutylacrylat (HBA) oder Hydroxybutylmethacrylat (HBMA). Bevorzugt sind Hydroxyethylacrylat (HEA) und Hydroxyethylmethacrylat (HEMA). Weiterhin eignet sich ein Monohydroxypoly(meth)acrylat eines Polyols, bevorzugt von Glycerin oder Trimethylolpropan.

In einem ersten Verfahren kann die Umsetzung des Polyesterpolyols **P** mit dem Diisocyanat und (Meth)acrylsäure oder (Meth)acrylamid oder einem (Meth)acrylsäureester der Formel (I) dadurch erfolgen, dass das Polyesterpolyol **P** und das Diisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei darauf zu achten ist, dass die Isocyanatgruppen gegenüber den Hydroxylgruppen im stöchiometrischen Überschuss vorliegen. Das aus dieser Umsetzung resultierende Isocyanatgruppen terminierte Polyurethanpolymer wird dann mit (Meth)-acrylsäure, (Meth)acrylamid oder mit einem (Meth)acrylsäureester der Formel (I), zum Polyurethan(meth)acrylat **PUMA** umgesetzt.
Im Rahmen dieser beschriebenen Herstellung des Polyurethan-(meth)acrylats **PUMA** ist dem Fachmann selbstverständlich klar, dass bei der Umsetzung des Isocyanatgruppen terminierten Polyurethanpolymers, welches aus der Reaktion des Polyesterpolyols **P** mit dem Diisocyanat resultiert, mit (Meth)acrylsäure ein Acylcarbamat hervorgeht und dieses bei geeigneten Reaktionsbedingungen nach einer Decarboxylierung zu einer (Meth)acrylamid-gruppen terminierten Verbindung reagiert. Bei der Umsetzung des Isocyanatgruppen terminierten Polyurethanpolymers mit (Meth)acrylamid hingegen entstehen Verbindungen, welche Acylharnstoffgruppen aufweisen. Verbindungen dieser beiden Arten werden im vorliegenden Dokument auch als Polyurethan(meth)acrylate bezeichnet.

In einem zweiten Verfahren kann das Polyesterpolyol **P** mit dem Diisocyanat umgesetzt werden, wobei die Hydroxylgruppen gegenüber den Isocyanatgruppen im stöchiometrischen Überschuss vorliegen. Das aus dieser Umsetzung resultierende Hydroxylgruppen terminierte Polyurethanpolymer kann mit (Meth)acrylsäure zum Polyurethan(meth)acrylat **PUMA** verestert werden.

Ein weiteres Verfahren zur Herstellung des Polyurethan(meth)acrylats **PUMA** ist, in einem ersten Schritt die (Meth)acrylsäure, das (Meth)acrylamid oder den (Meth)acrylsäureester der Fromel (I) mit mindestens einem Diisocyanat umzusetzen, welches in einer Menge eingesetzt wird, dass die Isocyanatgruppen gegenüber den Hydroxylgruppen im Überschuss vorliegen. In einer folgenden Reaktion wird das resultierende, eine Isocyanatgruppen aufweisende Zwischenprodukt mit mindestens einem Polyesterpolyol **P** zum Polyurethan(meth)acrylat **PUMA** umgesetzt.
Ebenfalls möglich ist die Herstellung des Polyurethan(meth)acrylats **PUMA** durch eine Veresterung von (Meth)acrylsäure mit einem Polyesterpolyol **P**, wobei das Polyesterpolyol in stöchiometrischem Überschuss vorliegt. In einer anschliessenden Reaktion reagiert das teilveresterte Polyesterpolyol **P** mit einem Diisocyanat zum Polyurethan(meth)acrylat **PUMA.**

Der Anteil an Polyurethan(meth)acrylat **PUMA** beträgt vorzugsweise 1 bis 80 Gew.-%, insbesondere 3 bis 50 Gew.-%, bevorzugt 5 bis 40 Gew.-%, an der gesamten Zusammensetzung.

Weiterhin kann die Zusammensetzung weiterhin mindestens einen Radikalbildner umfassen.
Der Radikalbildner ist insbesondere ein Peroxid, ein Hydroperoxid oder ein Perester. Meist bevorzugt ist der Radikalbildner Dibenzoylperoxid.

Typischerweise weist die Zusammensetzung weiterhin mindestens einen Katalysator für die Radikalbildung auf. Dieser Katalysator ist insbesondere ein tertiäres Amin, ein Übergangsmetallsalz oder ein Übergangsmetallkomplex. Beispielsweise sind solche geeignete tertäre Amine aromatische Amine, insbesondere ausgewählt aus der Gruppe bestehend aus N,N-Dimethylanilin, N,N-Diethylanilin, N,N-Bis(hydroxyalkyl)anilin wie N,N-Bis(2-hydroxyethyl)anilin, N,N-Alkylhydroxyalkylanilin wie N-Ethyl-N-hydroxyethylanilin, N,N-Dimethyl-p-toluidin, N,N-Diethyl-p-toluidin, N-Methyl-N-hydroxyethyl-p-toluidin, N,N-Bis(2-hydroxyethyl)-p-toluidin sowie alkoxylierte N,N-Bis-(hydroxyethyl)-p-toluidine, N-ethoxyliertes p-Toluidin, N,N-Bis(2-hydroxyethyl)-xylidin, N-Alkylmorpholin und Mischungen davon. Übergangmetallsalze und Übergangsmetallkomplexe sind beispielsweise Salze und Komplexe von Cobalt, Nickel, Kupfer, Mangan oder Vanadium.
Weitere bevorzugte Katalysatoren für die Radikalbildung sind beispielsweise beschrieben in den Abschnitten [0041] - [0054] von US 2002/0007027 A1, dessen gesamte Offenbarung hiermit durch Bezugnahme eingeschlossen wird.
Der Katalysator für die Radikalbildung wird üblicherweise in einer Menge von 0.01 bis 3 Gew.-%, insbesondere von 0.1 bis 2 Gew.-%, bezogen auf die Zusammensetzung, eingesetzt.

Als Radikalbildner können beispielsweise auch Moleküle eingesetzt werden, welche unter Einfluss von Wärme oder von elektromagnetischer Strahlung Radikale bilden, die dann zur Polymerisation der Zusammensetzung führen. Typischerweise sind dies thermisch aktivierbare Radikalbildner und Photoinitiatoren.
Als thermisch aktivierbare Radikalbildner eignen sich solche, welche bei Raumtemperatur noch genügend stabil sind, bei leicht erhöhter Temperatur aber bereits Radikale bilden, beispielsweise Azo-Bis-Isobutyronitril (AIBN).
Als Photoinitiator werden Radikalbildner bezeichnet, welche unter dem Einfluss von elektromagnetischer Strahlung Radikale bilden. Insbesondere geeignet ist ein Photoinitiator, welcher bei einer Bestrahlung mit einer elektromagnetischen Strahlung der Wellenlänge von 230 nm bis 400 nm Radikale bildet und bei Raumtemperatur flüssig ist. Beispielsweise sind derartige Photoinitiatoren ausgewählt aus der Gruppe bestehend aus α-Hydroxyketonen, Phenylglyoxylaten, Monoacylphosphinen, Diacylphosphinen, Phosphinoxiden und Mischungen davon.

Die Zusammensetzung kann weiterhin zusätzlich mindestens einen Haftverbesserer, insbesondere eine (Meth)acrylsäure, ein Metall(meth)acrylat oder ein (Meth)acrylat der Formel (II), enthalten.

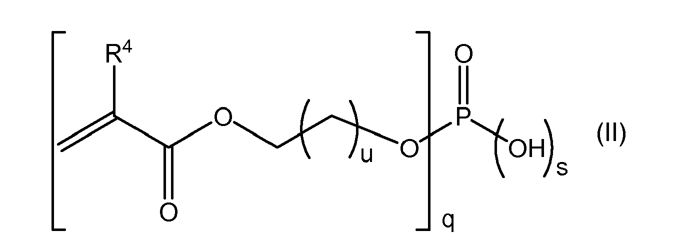

Dabei steht der Rest R⁴ entweder für ein Wasserstoffatom oder für eine Methylgruppe. Der Index u steht für einen Wert von 1 bis 15, insbesondere von 1 bis 5, bevorzugt von 1 bis 3. Der Index q steht für einen Wert von 1 bis 3 und der Index s für einen Wert von 3 minus q.
Bevorzugte Metall(meth)acrylate sind Metall(meth)acrylate von Calcium, Magnesium oder Zink, welche eine Hydroxylgruppe und/oder (Meth)-acrylsäure oder (Meth)acrylat als Ligand oder Anion aufweisen. Besonders bevorzugte Metall(meth)acrylate sind Zinkdi(meth)acrylat, Calciumdi(meth)-acrylat, Zn(OH)(meth)acrylat und Magnesiumdi(meth)acrylat.
Bevorzugte (Meth)acrylate der Formel (II) sind 2-Methacryloyloxyethylphosphat, Bis(2-Methacryloyloxyethyl)phosphat sowie Tris(2-Methacryloyloxyethyl)phosphat und Mischungen davon.

Weitere geeignete Haftverbesserer sind Silane, insbesondere organofunktionelle Silane. Besonders geeignet sind dabei (Meth)acryloxy-alkyltrialkoxysilane wie 3-Methacryloxypropyltrimethoxysilan, Glycidyloxyalkyltrialkoxysilane und dergleichen. Beispielsweise sind derartige geeignete Silane kommerziell erhältlich unter dem Handelsnamen Dynasylan^{®} MEMO von der Firma Evonik Degussa GmbH, Deutschland.

Der Anteil des gegebenenfalls vorhandenen Haftverbesserers an der gesamten Zusammensetzung beträgt vorzugsweise zwischen 0.01 und 12 Gew.-%, insbesondere zwischen 0.5 und 8 Gew.-%.

Weiterhin kann die Zusammensetzung zusätzlich mindestens ein Core-Shell Polymer enthalten. Core-Shell Polymere bestehen aus einem elastischen Kernpolymer (Core) und einem starren Schalen-Polymer (Shell). Besonders geeignete Core-Shell Polymere bestehen aus einer starren Schale eines starren thermoplastischen Polymers, welcher auf einem Kern aus vernetztem elastischem Acrylat- oder Butadien-Polymer aufgepfropft ist.
Besonders geeignete Core-Shell Polymere sind diejenigen, welche im radikalisch polymerisierbaren Monomer **M** aufquellen, sich aber darin nicht lösen.
Bevorzugte Core-Shell Polymere sind so genannte MBS Polymere, welche beispielsweise kommerziell unter dem Handelsnamen Clearstrength^{®} von Arkema Inc., USA, oder Paraloid^{®} von Rohm and Haas, USA, erhältlich sind. Die Core-Shell Polymere werden bevorzugt in einer Menge von 0.01 bis 30 Gew.-%, insbesondere von 10 bis 25 Gew.-%, bezogen auf die gesamte Zusammensetzung, eingesetzt.

Die Zusammensetzung kann weiterhin zusätzliche feste oder flüssige Zähigkeitsverbesserer enthalten. Unter einem "Zähigkeitsverbesserer" wird hierbei und im Folgenden ein Zusatz zu einer Polymermatrix verstanden, der bereits bei geringen Zuschlägen von 0.1 bis 15 Gew.-%, insbesondere von 0.5 bis 8 Gew.-%, bezogen auf das Gesamtgewicht der Zusammensetzung, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.
Neben den vorhergehend beschriebenen Core-Shell-Polymeren eignen sich als feste Zähigkeitsverbesserer beispielsweise organische ionengetauschte Schichtminerale, wie sie dem Fachmann unter den Begriffen Organoclay oder Nanoclay bekannt sind; Polymere oder Blockcopolymere, insbesondere der Monomere Styrol, Butadien, Isopren, Chloropren, Acrylnitril und Methylmethacrylat, sowie chlorsulfoniertes Polyethylen; und amorphes Siliciumdioxid.
Als flüssige Zähigkeitsverbesserer eignen sich insbesondere Flüssigkautschuke, wie sie unter den Handelsnahmen Hypro^{®} CTBN, ETBN oder VTBN kommerziell erhältlich sind von der Firma Emerald Performance Materials, LLC, USA, sowie epoxidharzmodifizierte Flüssigkautschuke des Typs Hypro^{®} CTBN.

Weiterhin kann die Zusammensetzung zusätzlich mindestens einen Füllstoff enthalten. Insbesondere geeignet sind dabei natürliche, gemahlene oder gefällte Calciumcarbonate (Kreiden), welche gegebenenfalls mit Fettsäuren und/oder deren Derivaten, insbesondere Stearaten, beschichtet sind, Montmorillonite, Bentonite, Bariumsulfat (BaSO₄, auch Baryt oder Schwerspat genannt), calcinierte Kaoline, Quarzmehl, Aluminiumoxide, Aluminiumhydroxide, Kieselsäuren, insbesondere pyrogene Kieselsäuren, modifizierte Rizinusölderivate und Polymerpulver oder Polymerfasern. Bevorzugt sind Calciumcarbonate, meist bevorzugt sind beschichtete Calciumcarbonate.
Der Füllstoff wird üblicherweise in einer Menge von 0.01 bis 50 Gew.-%, insbesondere von 10 bis 30 Gew.-%, bevorzugt 15 bis 20 Gew.-%, bezogen auf die gesamte Zusammensetzung, eingesetzt.

Die Zusammensetzung kann weiterhin zusätzlich mindestens ein Epoxidharz enthalten, welches durchschnittlich mehr als eine Epoxidgruppe pro Molekül aufweist. Vorzugsweise handelt sich dabei um Diglycidylether von Bisphenol A, von Bisphenol F sowie von Bisphenol A/F. Die Bezeichnung "A/F" verweist hierbei auf eine Mischung von Aceton mit Formaldehyd, welche als Edukt bei dessen Herstellung verwendet wird. Bevorzugt stellt das Epoxidharz ein Epoxid-Flüssigharz dar. Weiterhin geeignet stellt das Epoxidharz eine Mischung von Epoxid-Flüssigharz mit Epoxid-Festharz dar.
Geeignete Epoxid-Flüssigharze sind beispielsweise unter den Handelsnamen Araldite^{®} GY 250, Araldite^{®} PY 304, Araldite^{®} GY 282 von der Firma Huntsman International LLC, USA, oder D.E.R.^{®} 331 oder D.E.R.^{®} 330 von der Firma The Dow Chemical Company, USA, oder unter dem Handelsnamen Epikote^{®} 828 oder Epikote^{®} 862 von der Firma Hexion Specialty Chemicals Inc, USA, kommerziell erhältlich.

Die Zusammensetzung kann gegebenenfalls zusätzlich noch weitere Bestandteile enthalten. Derartige zusätzliche Bestandteile sind insbesondere, Farbstoffe, Pigmente, Inhibitoren, UV- und Hitzestabilisatoren, Antistatika, Flammschutzmittel, Biozide, Weichmacher, Wachse, Verlaufsmittel, Haftvermittler, Thixotropierungsmittel, Abstandhalter und weitere dem Fachmann bekannte gängige Rohstoffe und Additive.

Vorzugsweise handelt es sich bei der Zusammensetzung um eine zweikomponentige Zusammensetzung, wobei zwei Komponenten **K1** und **K2** bis zur Applikation getrennt voneinander aufbewahrt werden. Typischerweise beinhaltet die erste Komponente **K1** insbesondere jene Inhaltsstoffe der beschriebenen Zusammensetzung, welche radikalisch polymerisierbare Gruppen aufweisen. Die zweite Komponente **K2** beinhaltet insbesondere die Radikalbildner. Weiterhin können in einer zweikomponentigen Zusammensetzung auch andere Bestandteile, insbesondere solche, welche durch Reaktion untereinander die Lagerstabilität der Zusammensetzung beeinträchtigen würden, getrennt aufbewahrt werden.
Bevorzugt weisen in beschriebenen zweikomponentigen Zusammensetzungen die Komponente **K1** das radikalisch polymerisierbare Monomer **M**, das Polyurethan(meth)acrylat **PUMA** und weitere gegebenenfalls vorhandene Bestandteile wie Haftverbesserer, Core-Shell Polymere, Katalysatoren für die Radikalbildung, Schlagzähigkeitsmodifikatoren, Metalloxide, Pigmente und Füllstoffe und die Komponente **K2** den Radikalstarter sowie gegebenenfalls vorhandene Pigmente, Füllstoffe und Epoxidharze auf. Das Volumenverhältnis beim Mischen von **K1** zu **K2** liegt insbesondere im Bereich von 1:1 bis 10:1.
In gewissen Fällen kann es vorteilhaft sein, die beiden Komponenten **K1** und **K2** unterschiedlich einzufärben. Dadurch lässt sich bei der Mischung der Komponenten die Mischgüte überprüfen und Mischfehler lassen sich frühzeitig erkennen. Ebenfalls lässt sich durch diese Massnahme qualitativ überprüfen, ob das vorgesehene Mischverhältnis eingehalten wurde.

Eine derartige zweikomponentige Zusammensetzung wird typischerweise in einer Verpackung aufbewahrt, welche zwei von einander getrennte Kammern aufweist. Die Komponente **K1** ist hierbei in der einen Kammer und die Komponente **K2** ist in der anderen Kammer der Verpackung vorhanden. Geeignete Verpackungen sind beispielsweise Doppelkartuschen, wie Zwillings- oder Koaxialkartuschen, oder Mehrkammerschlauchbeutel mit Adapter. Bevorzugt erfolgt das Mischen der beiden Komponenten **K1** und **K2** mit Hilfe eines Statikmischers, welcher auf die Verpackung mit zwei Kammern aufgesetzt werden kann.
Solche geeigneten Verpackungen sind beispielsweise beschrieben in US 2006/0155045 A1, WO 2007/096355 A1 und in US 2003/0051610A1, deren gesamte Offenbarung hiermit durch Bezugnahme eingeschlossen wird.

In einer grosstechnischen Anlage werden die beiden Komponenten **K1** und **K2** typischerweise in Fässern oder Hobbocks voneinander getrennt aufbewahrt und bei der Applikation, beispielsweise mittels Zahnradpumpen, ausgepresst und vermischt. Die Zusammensetzung kann dabei von Hand oder in einem automatisierten Prozess mittels Roboter auf ein Substrat aufgetragen werden.

Die Aushärtung der erfindungsgemässen Zusammensetzung erfolgt durch eine radikalische Polymerisationsreaktion der radikalisch polymerisierbaren Monomere **M** und gegebenenfalls weiterer radikalisch polymerisierbarer Bestandteile in der Zusammensetzung. Der Ablauf, insbesondere die Geschwindigkeit, der zur Aushärtung der Zusammensetzung führenden Reaktion, kann durch die Wahl der eingesetzten Bestandteile eingestellt werden. Typischerweise verläuft die Aushärtung der Zusammensetzung in der Art, dass die Zusammensetzung trotz einer langen Offenzeit bereits in einem frühen Stadium eine hohe Anfangsfestigkeit erhält.

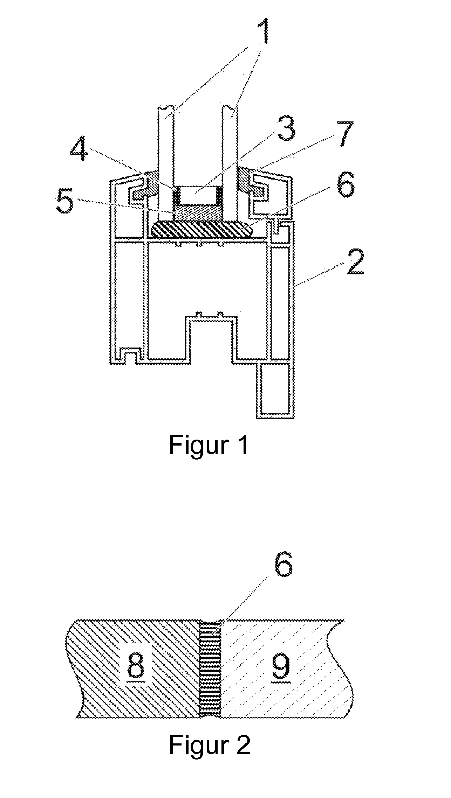

Weiterhin betrifft die Erfindung die Verwendung einer Zusammensetzung, wie sie vorhergehend beschrieben ist, als Klebstoff, Dichtstoff oder als Beschichtung. Insbesondere eignet sich die erfindungsgemässe Zusammensetzung für das Verkleben, Abdichten oder Beschichten von Substraten bestehend aus weichmacherhaltigen Materialien. Beispielsweise sind dies Kunststoffe, Baumaterialien, wie Beton oder Gips, oder auch lackierte Substrate wie Metalle. Weiterhin geeignet ist die erfindungsgemässe Zusammensetzung auch für Verklebungen, Abdichtungen oder Beschichtungen, bei welchen die ausgehärtete Zusammensetzung mit anderen weichmacherhaltigen Klebstoffen, Dichtstoffen und/oder Beschichtungen in Berührung kommt. Bevorzugt eignet sich die erfindungsgemässe Zusammensetzung für Verklebungen im Fensterbau, wo Glas mit weichmacherhaltigen PVC-Rahmen verklebt wird und/oder wo der Klebstoff direkt an eine weichmacherhaltige Dichtung angrenzt. Eine derartige bevorzugte Anwendung ist beispielsweise in Figur 1 dargestellt.

Figur 1 zeigt eine schematische Darstellung eines Fensterprofils mit eingeklebter Isolierglasscheibe im Teilquerschnitt. Dabei ist eine Isolierglasscheibe, bestehend aus Glasscheiben 1, Abstandhalter 3 mit Primärdichtung 4 sowie Sekundärdichtung 5, mit einem Fensterrahmen 2 aus Polyvinylchlorid (PVC) verklebt. Dabei ist der Klebstoff 6 in direktem Kontakt mit dem weichmacherhaltigem Fensterrahmen 2. Weiterhin ist der Klebstoff in direktem Kontakt mit der Sekundärdichtung 5, welche oftmals aus einem weichmacherhaltigen Silikondichtmittel besteht. Sowohl der Fensterrahmen 2 als auch die Sekundärdichtung 5 können Weichmacher ausschwitzen, welcher dann den Klebstoff 6 beeinträchtigen könnte. Weitere Quellen von Weichmacher können beispielsweise auch die Primärdichtung 4 sein, welche den Abstandhalter 3 mit den Glasscheiben verbindet, oder allfällige andere vorhandene Dichtungen, wie beispielsweise Dichtungslippen 7.
Die erfindungsgemässe Zusammensetzung weist den Vorteil auf, dass sie keinen oder nur vernachlässigbar geringe Mengen an Weichmacher aufnimmt und demzufolge dadurch nicht beeinträchtigt wird. So kann eine konstante und langlebige Klebeverbindung gewährleistet werden.

Weiterhin geeignet ist die erfindungsgemässe Zusammensetzung zur Verklebung von weichmacherhaltigen Materialien mit Materialien, welche keine Weichmacher enthalten und/oder welche bei Kontakt mit Weichmacher diesen aufnehmen können und dadurch in ihren Eigenschaften beeinträchtigt werden können. Bei einer derartigen Verwendung dient die erfindungsgemässe Zusammensetzung, zusätzlich zu ihrer Funktion als Klebstoff, Dichtstoff oder als Beschichtung, auch als Weichmachersperre.

Figur 2 zeigt eine schematische Darstellung zweier verklebter Substrate, von denen eines aus einem weichmacherhaltigen Material 8 besteht und eines aus einem nicht weichmacherhaltigen Material 9. Durch die Eigenschaft des erfindungsgemässen Klebstoffs 6, keine Weichmacher aufzunehmen wird eine Migration von Weichmachern vom weichmacherhaltigen Material 8 zum nicht weichmacherhaltigen Material 9 durch den Klebstoff hindurch verhindert.

Das Substrat, auf dessen Oberfläche die Zusammensetzung appliziert wird, kann im Vorfeld mit geeigneten Vorbehandlungsmitteln oder Reinigern behandelt worden sein. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösungsmitteln oder eine Beflammung oder eine Plasmabehandlung, insbesondere eine Luftplasmabehandlung bei Atmosphärendruck.
Besonders geeignet ist die Vorbehandlung bzw. die Reinigung der Substrate mit Sika^{®} Cleaner P oder Sika^{®} ADPrep, welche kommerziell erhältlich sind bei Sika Schweiz AG.

Die erfindungsgemässe Zusammensetzung wird insbesondere verwendet in einem Verfahren des Verklebens zweier Substrate **S1** und **S2** umfassend die Schritte
i) Applizieren einer Zusammensetzung gemäss vorhergehender Beschreibung auf ein Substrat **S1;**
ii) Kontaktieren der applizierten Zusammensetzung mit einem zweiten Substrat **S2** innerhalb der Offenzeit;
oder
i') Applizieren einer Zusammensetzung gemäss vorhergehender Beschreibung auf ein Substrat **S1;**
ii') Applizieren einer Zusammensetzung gemäss vorhergehender Beschreibung auf ein Substrat **S2;**
iii') Fügen der beiden mit Zusammensetzung versehenen Substrate **S1** und **S2** innerhalb der Offenzeit;
oder
i") Applizieren einer Zusammensetzung gemäss vorhergehender Beschreibung zwischen zwei Substrate **S1** und **S2;**
Dabei besteht das zweite Substrat **S2** aus dem gleichen oder einem unterschiedlichen Material wie das Substrat **S1.** Im Fall einer zweikomponentigen Zusammensetzung erfolgt vor dem Schritt i), bzw. i'), ii') und i"), ein zumindest partielles Mischen der zwei Komponenten.

Ebenfalls möglich ist ein Verfahren der Verklebung zweier Substrate **S1** und **S2** umfassend die Schritte
i''') Applizieren einer Komponente **K1** gemäss vorhergehender Beschreibung auf ein Substrat **S1;**
ii''') Applizieren einer Komponente **K2** gemäss vorhergehender Beschreibung auf ein Substrat **S2;**
iii''') Fügen der beiden mit je einer Komponente **K1** bzw. **K2** versehenen Substrate **S1** und **S2**.
Bei einem derartigen Verfahren mischen sich die beiden Komponenten **K1** und **K2** beim Fügen der Substrate. Dieses Verfahren eignet sich insbesondere bei Verklebungen über sehr dünne Klebstoffschichten.

Insbesondere wird die erfindungsgemässe Zusammensetzung auch verwendet in einem Verfahren des Abdichtens oder des Beschichtens eines Substrates **S1** umfassend die Schritte
i'''') Applizieren einer Zusammensetzung gemäss vorhergehender Beschreibung auf ein Substrat **S1;**
ii"") Aushärtung der Zusammensetzung.
Im Fall einer zweikomponentigen Zusammensetzung erfolgt vor dem Schritt i''''), ein zumindest partielles Mischen der zwei Komponenten.

Weiterhin umfasst die vorliegende Erfindung eine ausgehärtete Zusammensetzung, welche aus einer vorhergehend beschriebenen Zusammensetzung durch einen Härtungsprozess erhältlich ist. Insbesondere handelt es sich bei der Zusammensetzung um eine zweikomponentige Zusammensetzung, so dass die ausgehärtete Zusammensetzung durch ein zumindest partielles Mischen der beiden Komponenten **K1** und **K2** erhältlich ist.

Ebenfalls umfasst die Erfindung Artikel, welche nach einem vorhergehend beschriebenen Verfahren verklebt, abgedichtet oder beschichtet wurden. Bei diesen Artikeln handelt es sich vorzugsweise um ein Bauwerk, insbesondere ein Bauwerk des Hoch- oder Tiefbaus, oder ein industrielles Gut oder ein Konsumgut, insbesondere ein Fenster, eine Haushaltmaschine, ein Sanitärobjekt, ein Werkzeug oder ein Transportmittel, insbesondere ein Automobil, ein Bus, ein Lastkraftwagen, ein Zug oder ein Schiff. Bevorzugt sind solche Artikel auch Anbauteile von industriellen Gütern oder Transportmittel, insbesondere auch Modulteile, welche an der Fertigungslinie als Module verwendet werden und insbesondere an- oder eingeklebt werden. Bevorzugt handelt es sich bei den Artikeln um Fenster, Türen, Tore, Klappen, Luken und dergleichen.

### Beispiele

### Herstellung der Zusammensetzungen

Die in der Tabelle 1 aufgeführten Bestandteile wurden in den angegebenen Gewichtsteilen in einem Dissolver bei einer Temperatur von maximal 80°C miteinander vermischt und eingerührt, bis eine makroskopisch homogene Paste erhalten wurde. Unmittelbar nach der Vermischung aller Bestandteile wurden die Probekörper hergestellt.

### Herstellung der Polyurethanmethacrylate PUMA' und PUMA" auf Basis von Polyestern

Es wurden 200 g Polyesterdiol (Dynacoll^{®} 7230 von Evonik Degussa GmbH, Deutschland; berechnetes Mₙ = 3'500 g/mol; OH-Zahl 27 bis 34 mg KOH/g) und 23 g 1-Isocyanato-3,3,5-trimethyl-5-isocyanatomethylcyclohexan (IPDI; Desmodur^{®} I, Bayer MaterialScience AG) in Anwesenheit von Dibutylzinndilaurat bei 90 °C zu einem Isocyanatgruppen terminierten Polyurethanpolymer mit einem titrimetrisch bestimmten Gehalt an freien Isocyanatgruppen von 1.0 Gew.-% umgesetzt. Anschliessend wurden 18.1 g Hydroxyethylmethacrylat (HEMA), unter dem Handelsnamen Rocryl^{®} 400 kommerziell erhältlich von der Firma Rohm and Haas, USA, zugegeben, welches mit den freien Isocyanatgruppen zum Polyurethanmethacrylat ***PUMA**'* reagiert. Erhalten wird eine farblose Flüssigkeit mit einem NCO-Gehalt von ≤0.05 Gew.-%.

Das Polyurethanmethacrylat ***PUMA**"* wurde analog zu ***PUMA**'* mit einem Polyesterdiol (Dynacoll^{®} 7250 von Evonik Degussa GmbH, Deutschland; berechnetes Mₙ = 5'500 g/mol; OH-Zahl 18 bis 24 mg KOH/g) hergestellt. Dabei wurden 200 g Polyesterdiol, 17.3 g IPDI und 11.7 g HEMA eingesetzt. Erhalten wird eine farblose Flüssigkeit mit einem NCO-Gehalt von ≤ 0.15 Gew.-%.

### Herstellung eines Polyurethanmethacrylats PUMA REF auf Basis eines Polyethers

Es wurden 758 g Polyetherdiol (berechnetes Mₙ = 4'000 g/mol; OH-Zahl 14.0 ± 1.5 mg KOH/g) und 45.5 g 1-Isocyanato-3,3,5-trimethyl-5-isocyanatomethyl-cyclohexan (IPDI; Desmodur^{®} I, Bayer MaterialScience AG) in Anwesenheit von Dibutylzinndilaurat bei 90 °C zu einem Isocyanatgruppen terminierten Polyurethanpolymer mit einem titrimetrisch bestimmten Gehalt an freien Isocyanatgruppen von 1.0 Gew.-% umgesetzt. Anschliessend wurden 26.54 g Hydroxyethylmethacrylat (HEMA), unter dem Handelsnamen Rocryl^{®} 400 kommerziell erhältlich von der Firma Rohm and Haas, USA, zugegeben, welches mit den freien Isocyanatgruppen zum Polyurethanmethacrylat ***REF*** reagiert. Erhalten wird eine farblose Flüssigkeit mit einem NCO-Gehalt von ≤ 0.05 Gew.-%.

### Beschreibung der Prüfmethoden

Die **Zugfestigkeit** und die **Bruchdehnung** wurden bestimmt nach DIN EN 53504 (Zuggeschwindigkeit: 200 mm/min) an Filmen mit einer Schichtdicke von 2 mm, welche im Normklima (23±1 °C, 50±5% relative Luftfeuchtigkeit) aushärteten. Die Proben wurden direkt nach eintägiger Lagerung bei 23 °C ("0d DIDP") und nach 7 Tagen ("7d DIDP") sowie nach 30 Tagen ("30d DIDP") und nach einem Jahr ("365d DIDP") Lagerung in Diisodecylphthalat (DIDP) geprüft. Während der Lagerung waren die Probekörper vollständig mit DIDP bedeckt.
Die **Weichmacheraufnahme** wurde anhand der Gewichtszunahme von Filmen mit einer Schichtdicke von 2 mm, welche im Normklima (23±1 °C, 50±5% relative Luftfeuchtigkeit) aushärteten, gemessen, nachdem diese 7 Tage ("7d DIDP") sowie 30 Tage ("30d DIDP") und ein Jahr ("365d DIDP") in Diisodecylphthalat (DIDP) gelagert wurden (Gewichtszunahme gegenüber "0d DIDP"). Während der Lagerung waren die Probekörper vollständig mit DIDP bedeckt. Bevor die Proben gewogen wurden, wurden sie mit einem Tuch trockengerieben.

**Tabelle 1 Zusammensetzungen 1 und 2 und das Referenzbeispiel Ref1 in Gewichtsanteilen sowie die Resultate; ^{a} Katalysator für Radikalbildung (tertiäres Amin auf Toluidinbasis).**

| | | ***1*** | ***2*** | ***Ref1*** |
|---|---|---|---|---|
| Tetrahydrofurfurylmethacrylat | | 51 | 51 | 51 |
| (Meth)acrylsäure | | 5 | 5 | 5 |
| ***PUMA'*** | | 13.5 | | |
| ***PUMA"*** | | | 13.5 | |
| ***PUMA REF*** | | | | 13.5 |
| Haftvermittler | | 7.5 | 7.5 | 7.5 |
| Core-Shell Polymer | | 24 | 24 | 24 |
| Dibenzoylperoxid | | 2.5 | 2.5 | 2.5 |
| Katalysator ^{a} | | 1.5 | 1.5 | 1.5 |
| | | | | |
| Gewichtszunahme [%] | 7d DIDP | 0.2 | 0.2 | 2.6 |
| | 30d DIDP | 0.3 | 0.8 | 6.0 |
| | 365d DIDP | 0.9 | 2.7 | 26.1 |
| Zugfestigkeit [MPa] | 0d DIDP | 15.3 | 15.5 | 15.3 |
| | 7d DIDP | 15.7 | 15.4 | 14.5 |
| | 30d DIDP | 16.3 | 15.8 | 12.5 |
| | 365d DIDP | 17.2 | 15.0 | 6.3 |
| Bruchdehnung [%] | 0d DIDP | 128 | 156 | 155 |
| | 7d DIDP | 112 | 142 | 145 |
| | 30d DIDP | 101 | 139 | 114 |
| | 365d DIDP | 85 | 135 | 102 |

## Patentansprüche

1. Zusammensetzung umfassend
a) mindestens ein radikalisch polymerisierbares Monomer **M**, sowie
b) mindestens ein Polyurethan(meth)acrylat **PUMA**, welches erhältlich ist aus der Umsetzung eines Polyesterpolyols **P** mit einem Diisocyanat und einer (Meth)acrylsäure oder einem (Meth)acrylamid oder einem
(Meth)acrylsäureester der Formel (I) 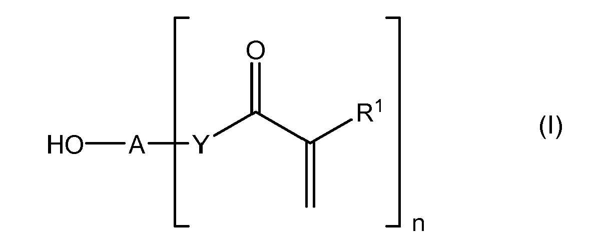
wobei der Rest R¹ für ein Wasserstoffatom oder für eine Methylgruppe steht;
der Rest A für einen (n+1)-wertigen Kohlenwasserstoffrest mit 1 bis 6 C-Atomen steht;
Y für O oder für NR² steht, wobei R² für ein Wasserstoffatom oder für einen einwertigen Kohlenwasserstoffrest mit 1 bis 6 C-Atomen steht;
und
der Index n für einen Wert von 1 bis 3 steht.

2. Zusammensetzung gemäss Anspruch 1, **dadurch gekennzeichnet, dass** die Zusammensetzung zusätzlich mindestens einen Radikalbildner, insbesondere ein Peroxid, ein Hydroperoxid oder ein Perester, meist bevorzugt Dibenzoylperoxid, enthält.

3. Zusammensetzung gemäss einem der vorhergehenden Ansprüche, **dadurch gekennzeichnet, dass** das radikalisch polymerisierbare Monomer **M** ausgewählt ist aus der Gruppe bestehend aus Methyl(meth)acrylat, Tetrahydrofurfuryl(meth)acrylat, Tetrahydrofuryl(meth)acrylat, Cyclohexyl-(meth)acrylat, Isobornyl(meth)acrylat und Trimethylcyclohexyl(meth)-acrylat.

4. Zusammensetzung gemäss einem der vorhergehenden Ansprüche **dadurch gekennzeichnet, dass** das radikalisch polymerisierbare Monomer **M** ein Methacrylat ist.

5. Zusammensetzung gemäss einem der vorhergehenden Ansprüche, **dadurch gekennzeichnet, dass** das Polyesterpolyol **P** ein Molekulargewicht von 400 bis 12'000 g/mol, insbesondere 1'000 bis 6'000 g/mol, bevorzugt 2'000 bis 5'500 g/mol, aufweist.

6. Zusammensetzung gemäss einem der vorhergehenden Ansprüche, **dadurch gekennzeichnet, dass** das Polyesterpolyol **P** ein aliphatisches Polyesterpolyol ist.

7. Zusammensetzung gemäss einem der vorhergehenden Ansprüche, **dadurch gekennzeichnet, dass** das Polyesterpolyol **P** ein Polyesterdiol ist.

8. Zusammensetzung gemäss einem der vorhergehenden Ansprüche, **dadurch gekennzeichnet, dass** das Diisocyanat ein aliphatisches oder ein cycloaliphatisches Diisocyanat ist, insbesondere 1-Isocyanato-3,3,5-trimethyl-5-isocyanatomethyl-cyclohexan (IPDI).

9. Zusammensetzung gemäss einem der vorhergehenden Ansprüche, **dadurch gekennzeichnet, dass** der (Meth)acrylsäureester der Formel (I) ausgewählt ist aus der Gruppe bestehend aus Hydroxypropylacrylat (HPA), Hydroxypropylmethacrylat (HPMA), Hydroxybutylacrylat (HBA) oder Hydroxybutylmethacrylat (HBMA), Hydroxyethylacrylat (HEA) und Hydroxyethylmethacrylat (HEMA).

10. Zusammensetzung gemäss einem der vorhergehenden Ansprüche, **dadurch gekennzeichnet, dass** die Zusammensetzung zusätzlich mindestens ein tertiäres Amin oder ein Übergangsmetallsalz oder ein Übergangsmetallkomplex als Katalysator für die Radikalbildung enthält.

11. Zusammensetzung gemäss einem der vorhergehenden Ansprüche, **dadurch gekennzeichnet, dass** der Anteil an Polyurethan(meth)acrylat **PUMA** 1 bis 80 Gew.-%, insbesondere 3 bis 50 Gew.-%, bevorzugt 5 bis 40 Gew.-%, an der gesamten Zusammensetzung beträgt.

12. Zusammensetzung gemäss einem der Ansprüche 2 bis 11, **dadurch gekennzeichnet, dass** die Zusammensetzung zweikomponentig ist.

13. Zusammensetzung gemäss Anspruch 12, **dadurch gekennzeichnet, dass** die erste Komponente **K1** das radikalisch polymerisierbare Monomer **M** und das Polyurethan(meth)acrylat PUMA enthält; und die zweite Komponente **K2** den Radikalbildner enthält.

14. Verwendung einer Zusammensetzung gemäss einem der Ansprüche 1 bis 13 als Klebstoff, Dichtstoff oder als Beschichtung, insbesondere für das Verkleben oder Abdichten oder Beschichten von Substraten bestehend aus weichmacherhaltigen Materialien.

15. Ausgehärtete Zusammensetzung, welche aus Zusammensetzung gemäss einem der Ansprüche 1 bis 13 durch einen Härtungsprozess erhältlich ist.
